(19)

Europäisches
Patentamt
European
Patent Office
Office européen
des brevets

(11) **EP 4 621 701 A1**

(12) **EUROPEAN PATENT APPLICATION**
published in accordance with Art. 153(4) EPC

(43) Date of publication:
**24.09.2025  Bulletin 2025/39**

(21) Application number: **22967473.4**

(22) Date of filing: **05.12.2022**

(51) International Patent Classification (IPC):
***G06T 3/00*** *(2024.01)*

(52) Cooperative Patent Classification (CPC):
**G06T 3/00**

(86) International application number:
**PCT/CN2022/136578**

(87) International publication number:
**WO 2024/119309 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
 • **BGI Shenzhen
 Shenzhen, Guangdong 518083 (CN)**
 • **BGI Shenzhen Co., Ltd
 Shenzhen, Guangdong 518083 (CN)**

(72) Inventors:
 • **SU, Kui
 Shenzhen, Guangdong 518083 (CN)**
 • **LIU, Huanlin
 Shenzhen, Guangdong 518083 (CN)**
 • **LI, Zepeng
 Shenzhen, Guangdong 518083 (CN)**
 • **LI, Mei
 Shenzhen, Guangdong 518083 (CN)**
 • **LI, Yuxiang
 Shenzhen, Guangdong 518083 (CN)**

(74) Representative: **Ashton, Gareth Mark et al
Baron Warren Redfern LLP
1000 Great West Road
Brentford TW8 9DW (GB)**

(54) **METHOD FOR STITCHING IMAGES, AND DEVICE THEREFOR**

(57)     A method for stitching a first image and a second image. The method comprises: determining overlapping regions of a first image and a second image (110); respectively cropping portions of the first image and the second image that are determined to be the overlapping regions into a plurality of first image overlapping subimages and a plurality of second image overlapping subimages of the same number, so as to pair same to form a plurality of overlapping sub-image pairs (120); performing frequency-domain calculation on the plurality of overlapping sub-image pairs, so as to obtain the offset between the first image and the second image (130); and translating the first image in the direction of the second image by the offset, and stitching same with the second image (140).

**_100_**

```
┌─────────────────────────────────────────────┐
│ Determine overlapping areas of a first image │──  _110_
│            and a second image                │
└─────────────────────────────────────────────┘
                      │
                      ▼
┌─────────────────────────────────────────────┐
│ Respectively crop parts, determined as the   │
│ overlapping areas, of the first image and    │──  _120_
│ the second image into a plurality of first   │
│ image overlapping sub-images and a plurality │
│ of second image overlapping sub-images of a  │
│ same number for pairing into a plurality of  │
│ overlapping sub-image pairs                  │
└─────────────────────────────────────────────┘
                      │
                      ▼
┌─────────────────────────────────────────────┐
│ Obtain an offset of a same feature between   │──  _130_
│ the first image and the second image         │
└─────────────────────────────────────────────┘
                      │
                      ▼
┌─────────────────────────────────────────────┐
│ Translate the first image toward a direction │
│ of the second image by the determined offset,│──  _140_
│ and stitch the first image and the second    │
│ image                                        │
└─────────────────────────────────────────────┘
```

Fig. 1

**Description**

**TECHNICAL FIELD**

The present disclosure relates to the field of image processing, and in particular, to a method and device for stitching images.

**BACKGROUND**

Image stitching is a process of combining a plurality of connected images into a panorama image based on overlapping parts between the images. However, since a shooting device (for example, a microscope) is affected by conditions such as the environment and hardware, overlapping parts between connected images obtained only by the shooting device cannot be completely matched, thereby bringing serious impact to image stitching processing.

Therefore, there is a need for a technology that can accurately match the overlapping parts of the connected images.

**SUMMARY**

Embodiments of the present disclosure are intended to provide an effective solution for accurately matching overlapping parts between the connected images to implement satisfactory image stitching. Specifically, embodiments of the present disclosure provide a method and device for stitching images.

In accordance with a first aspect of the present disclosure, an embodiment provides a method for stitching a first image and a second image, including:

- determining an overlapping region of the first image and the second image;

- respectively cropping a part, determined as the overlapping region, of the first image and the second image into a plurality of first image overlapping sub-images and a plurality of second image overlapping sub-images of a same number for pairing into a plurality of overlapping sub-image pairs;

- obtaining an offset between the first image and the second image by performing frequency domain calculation on the plurality of overlapping sub-image pairs; and

- translating the first image toward a direction of the second image by the offset, and stitching the first image and the second image.

In some embodiments, determining an overlapping region of the first image and the second image includes:

- determining a matching direction between the first image and the second image; and

- selecting, in the determined matching direction, an adjacent area with identical size in the first image and the second image as the overlapping region.

In some embodiments, the overlapping region is selected in such a way that a proportion of an actual overlapping part of the first image and the second image in the overlapping region is greater than a predetermined threshold.

In some embodiments, respectively cropping a part, determined as the overlapping region, of the first image and the second image into a plurality of first image overlapping sub-images and a plurality of second image overlapping sub-images of a same number for pairing into a plurality of overlapping sub-image pairs includes:

- performing denoising and/or windowing processing on the part, determined as the overlapping region, of the first image and the second image;

- merging, in a direction perpendicular to the matching direction, the first image and the second image subjected to the denoising and/or windowing processing, and resampling the part, subjected to the denoising and/or windowing processing, of the first image and the second image based on an identical image cropping size, to obtain the plurality of first image overlapping sub-images and the plurality of second image overlapping sub-images; and

- sequentially pairing the plurality of first image overlapping sub-images with the plurality of second image overlapping sub-images one by one in the direction perpendicular to the matching direction to form the plurality of overlapping sub-image pairs.

**In** some embodiments, the method may further include:

- after obtaining the plurality of overlapping sub-image pairs and before performing frequency domain processing on the plurality of overlapping sub-image pairs, removing an overlapping sub-image pair with features less than a specific criterion and/or noise greater than a specific criterion from the plurality of overlapping sub-image pairs.

**In** some embodiments, obtaining an offset between the first image and the second image by performing frequency domain calculation on the plurality of overlapping sub-image pairs includes: stacking cross-power spectra of the plurality of overlapping sub-image pairs, and obtaining the offset from the stacked cross-power spectra by a Dirac function.

In some embodiments, stacking cross-power spectra of the plurality of overlapping sub-image pairs, and obtaining the offset from the stacked cross-power spectra by a Dirac function includes:

- transforming each overlapping sub-image in the plurality of overlapping sub-image pairs from a location coordinate system to a frequency domain (for example, through 2D image discrete Fourier transform (DFT));

- calculating a cross-power spectrum corresponding to each of the plurality of overlapping sub-image pairs;

- performing inverse DFT on the obtained cross-power spectrum corresponding to each overlapping sub-image pair, to obtain a Dirac function representation of the overlapping region; and

- determining coordinates of the maximum peak of the obtained Dirac function representation in the overlapping region as the offset.

In some embodiments, before the obtained cross-power spectrum corresponding to each overlapping sub-image pair is accumulated, for each obtained overlapping sub-image pair, the method further includes:

- transforming the overlapping sub-image pair to the location coordinate system; and

- performing windowing processing on overlapping sub-images transformed to the location coordinate system, to enhance features in the overlapping sub-images.

In some embodiments, performing inverse DFT on the obtained cross-power spectrum corresponding to each overlapping sub-image pair, to obtain a Dirac function representation of the overlapping region includes:

- performing inverse DFT on the obtained cross-power spectrum corresponding to each overlapping sub-image pair, to obtain a plurality of stacked Dirac function representations; and

- performing weighted aggregation on the plurality of obtained stacked Dirac function representations to obtain the Dirac function representation of the overlapping region.

A weighting coefficient of each overlapping sub-image pair depends on an energy spectrum of the overlapping sub-image pair and/or a matching number of feature points of the overlapping sub-image pair and/or an image definition of the overlapping sub-image pair.

In accordance with a second aspect of the present disclosure, an embodiment provides a device for stitching images. The device includes at least one processor, and a memory communicatively connected to the at least one processor. The memory stores an instruction executable by the at least one processor which, when executed by the at least one processor, causes the at least one processor to implement any one of the foregoing methods.

In accordance with a third aspect of the present disclosure, an embodiment provides a computer-readable storage medium, storing an executable instruction which, when executed by a processor, causes the processor to implement any one of the foregoing methods.

With the foregoing technical schemes, overlapping parts between the connected images to be stitched can be accurately matched to implement satisfactory image stitching.

## BRIEF DESCRIPTION OF DRAWINGS

To more comprehensively understand the present disclosure and advantages thereof, reference will now be made to the following descriptions in conjunction with the accompanying drawings, in which:

FIG. 1 is a schematic flowchart of a method for stitching images according to an embodiment of the present disclosure;

FIG. 2 is a flowchart of an implementation of a method for stitching images according to an embodiment of the present disclosure;

FIG. 3 is a schematic diagram of definition of a matching direction according to an embodiment of the present disclosure;

FIG. 4 is a schematic diagram of to-be-registered images according to an embodiment of the present disclosure;

FIG. 5 is a schematic diagram of cropping and stacking images of overlapping regions according to an embodiment of the present disclosure;

FIG. 6 is a schematic diagram of a cross-power spectrum corresponding to an overlapping sub-image pair according to an embodiment of the present disclosure;

FIG. 7 is a schematic diagram of processing a cross-power spectrum by using a window function according to an embodiment of the present disclosure;

FIG. 8 is a diagram of weighted Dirac function representation accumulation according to an embodiment of the present disclosure;

FIG. 9 is a diagram showing effect of performing a method for stitching images according to an embodiment of the present disclosure;

FIG. 10 is a diagram showing a stitching effect with a template line in a method for stitching images according to an embodiment of the present disclosure; and

FIG. 11 is a schematic block diagram of a device for stitching images according to an embodiment of the present disclosure.

In the accompanying drawings, the same or similar structures are indicated with the same or similar reference numerals.

## DETAILED DESCRIPTION

Other aspects, advantages, and salient features of the present disclosure will become apparent to those having ordinary skills in the art from the following detailed descriptions of example embodiments of the present disclosure in conjunction with the accompanying drawings.

In the present disclosure, the terms "include" and "have" and derivatives thereof are intended to include but not limit, and the term "or" is inclusive, meaning "and/or".

In this description, the following embodiments for describing the principle of the present disclosure are merely illustrative and should not be interpreted in any way as limiting the scope of the disclosure. The following descriptions with reference to the accompanying drawings are intended to help comprehensively understand example embodiments of the present disclosure defined by the claims and equivalents thereof. The following descriptions include a variety of specific details to help understanding, but these details should be considered only as examples. Therefore, those having ordinary skills in the art should be aware that various changes and modifications may be made to the embodiments described herein without departing from the scope of the present disclosure. In addition, for clarity and brevity, descriptions of well-known functions and structures are omitted. In addition, throughout the accompanying drawings, the same reference numbers are used for indicating similar functions and operations.

Image stitching mainly includes two core technologies: image registration and image fusion. Image registration is the basis of image fusion and directly affects quality of image stitching, and a calculation amount of image stitching mainly depends on a registration algorithm.

The inventors have implemented various corresponding technical methods for connected images obtained in different scenes. For example, according to an area-based registration algorithm, similarity between images is established by using grayscale information of the images, a registration area between the two images is found based on a metric value of the similarity, thereby establishing a transformation relationship between the two images. For example, in the above method, an image block of a first image that is in an overlapping part is used as a template, a similar corresponding image block is searched in a second image. Then, matching degrees are obtained by comparing each pixel which is simultaneously covered by the two images, and the best matching is selected after all possible translations.

Another image registration technology is a feature-based registration algorithm. In this method, invariant features (feature points, contours, or the like) in images are mainly used as a basis for image registration, with the advantage being that the number of extracted image features is much less than the number of image pixels, thereby greatly reducing time complexity and space complexity of the algorithm.

However, these technologies all have more or less problems. The area-based registration algorithm achieves high registration precision, but also requires a huge amount of calculation, because this method requires similarity comparison of overlapping regions pixel by pixel to maintain high stitching precision. For the feature-based registration algorithm, although the calculation amount of the algorithm is reduced by extracting feature points of images, in actual registration scenarios, feature points are often not obvious, thereby easily leading to feature point mismatching, greatly reducing registration precision, and limiting application scenarios of stitching.

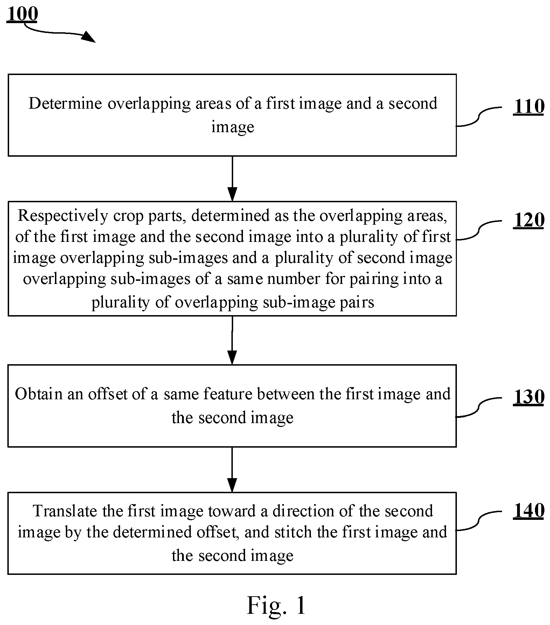

To resolve the foregoing problems to some extent, the present disclosure proposes a method for stitching images (for example, a first image and a second image). FIG. 1 is a schematic flowchart of a method for stitching images according to an embodiment of the present disclosure.

As shown in FIG. 1, in a step 110, an overlapping region of a first image and a second image are determined.

Herein, the first image and the second image are only intended to distinguish between the two images to be stitched, and the technical scheme of the present disclosure is not limited by such terms. In other examples, other different terms may be used. For example, in some embodiments of the present disclosure, one of the first image and the second image may be named as template image or image of destination (dst), and the other image may be named as image of source (src), where src is translated toward dst during image registration.

In some examples, determining an overlapping region of a first image and a second image includes: determining a matching direction between the first image and the second image; and selecting, in the determined matching direction, an adjacent area with identical size in the first image and the second image as the overlapping region.

For example, the matching direction (or referred to as a stitching direction) may be determined based on a moving direction of a shooting device when the two images are shot. If the first image and the second image are two images sequentially shot when the shooting device moves horizontally, the matching direction between the two images may be determined to be a horizontal direction. Certainly, other available methods may also be used to determine a relative positional relationship between the two images and the matching direction. Details are not described herein.

In some examples, the overlapping region is selected in such a way that a proportion of an actual overlapping part of the first image and the second image in the overlapping region is greater than a predetermined threshold. In some examples, the predetermined threshold is determined to be 30%. It should be noted that, this value is merely an example. In some other examples, the predetermined threshold may have other larger or smaller values.

In a step 120 of FIG. 1, parts of the first image and the second image determined as the overlapping regions are respectively cropped into a plurality of first image overlapping sub-images and a plurality of second image overlapping sub-images having identical number for pairing into a plurality of overlapping sub-image pairs.

In some examples, this operation may include: performing denoising and/or windowing processing on the parts of the first image and the second image determined as the overlapping regions; merging, in a direction perpendicular to the matching direction, the first image and the second image subjected to the denoising and/or windowing processing, and resampling the parts of the first image and the second image subjected to the denoising and/or windowing processing based on an identical image cropping size, to obtain the multiple first image overlapping sub-images and the multiple second image overlapping sub-images; and sequentially pairing the multiple first image overlapping sub-images with the plurality of second image overlapping sub-images one by one in the direction perpendicular to the matching direction to form the plurality of overlapping sub-image pairs.

The denoising processing in the foregoing operation may be performed through, for example, Gaussian filtering, or other denoising methods used in the field of image processing may be used for the processing. Images with spectrum leakage suppressed may be obtained through the windowing processing. A used window includes, but is not limited to, a Hanning window, a Hamming window, or the like.

In some examples of the present disclosure, the resampling may be performed through a sliding window method. In this method, specific overlapping regions may be set, and a plurality of pairs of stacked small sub-images need to ensure that cropped areas of src and dst are located in the overlapping regions, and are located at the same coordinate system locations. Any available method may be used to implement the resampling, which is not limited herein. For example, a target detection method is used to crop areas with many features.

After the plurality of overlapping sub-image pairs are obtained, the method shown in FIG. 1 may optionally include: removing an overlapping sub-image pair with features less than a specific criterion and/or noise greater than a specific criterion from the plurality of overlapping sub-image pairs. For example, gradient detection may be performed to filter out a sub-image pair with fewer features and/or more noise. Methods used for gradient detection may include, but not limited to, Sobel, Canny, etc. In addition, any other method that can be used to detect the number of features and/or noise in an image can be used herein, which is not limited herein.

In a step 130 of FIG. 1, an offset between the first image and the second image is obtained by performing frequency domain calculation on the plurality of overlapping sub-image pairs.

Optionally, after the sub-image pair with fewer features and/or more noise is removed in the foregoing optional step, the remainder are subjected to frequency domain superimposition and resonance.

In some examples, the step 130 may be performed by a Dirac function. For example, the step 130 may include: stacking cross-power spectra of the plurality of overlapping sub-image pairs, and obtaining the offset from the stacked cross-power spectra by using the Dirac function. For example, each overlapping sub-image in the plurality of overlapping sub-image pairs may be transformed from a location coordinate system to a frequency domain. The transformation may be completed through, for example, 2D image DFT, or any other method that can be used to implement domain transformation. Details are not described herein. Then, a cross-power spectrum corresponding to each of the plurality of overlapping sub-image pairs may be calculated. Inverse DFT is performed on the obtained cross-power spectrum corresponding to each overlapping sub-image pair, to obtain a Dirac function representation of the overlapping regions. Coordinates of a maximum peak of the obtained Dirac function representation in the overlapping regions are determined as the offset.

In some examples, before the obtained cross-power spectrum corresponding to each overlapping sub-image pair is accumulated, for each obtained overlapping sub-image pair, features in the overlapping sub-image pair may be further improved to become more obvious. For example, the overlapping sub-image pair may be transformed to the location coordinate system, and windowing processing may be performed on overlapping sub-images transformed to the location coordinate system, to enhance features in the overlapping sub-images. A window function used herein may be a Blackman window, a Hanning window, or a Hamming window, or any other function that can enhance features in images. Enhancement of the features in the overlapping sub-images can effectively improve the success rate of image registration of images with unobvious features. The method used for image feature enhancement may not be limited to the windowing processing, and any other method that can be used to enhance image features may be used herein.

In some embodiments, performing inverse DFT on the obtained cross-power spectrum corresponding to each overlapping sub-image pair, to obtain a Dirac function representation of the overlapping regions may include: performing inverse DFT on the obtained cross-power spectrum corresponding to each overlapping sub-image pair, to obtain stacked Dirac function representations; and performing weighted aggregation on the obtained stacked Dirac function representations to obtain the Dirac function representation of the overlapping regions. In this scheme, an overlapping sub-image pair with more obvious features may be assigned a larger weighting coefficient. For example, a weighting coefficient of each overlapping sub-image pair may depend on an energy spectrum (for example, energy intensity of a maximum peak of the Dirac function) of the overlapping sub-image pair and/or a matching number of feature points of the overlapping sub-image pair and/or an image definition of the overlapping sub-image pair, or any other metric that can represent whether the overlapping sub-image pair has more obvious features.

In a step 140 of FIG. 1, the first image is translated toward a direction of the second image by the determined offset, and the first image and the second image are stitched.

With the method shown in FIG. 1, overlapping parts of connected images to be stitched can be accurately matched to implement satisfactory image stitching.

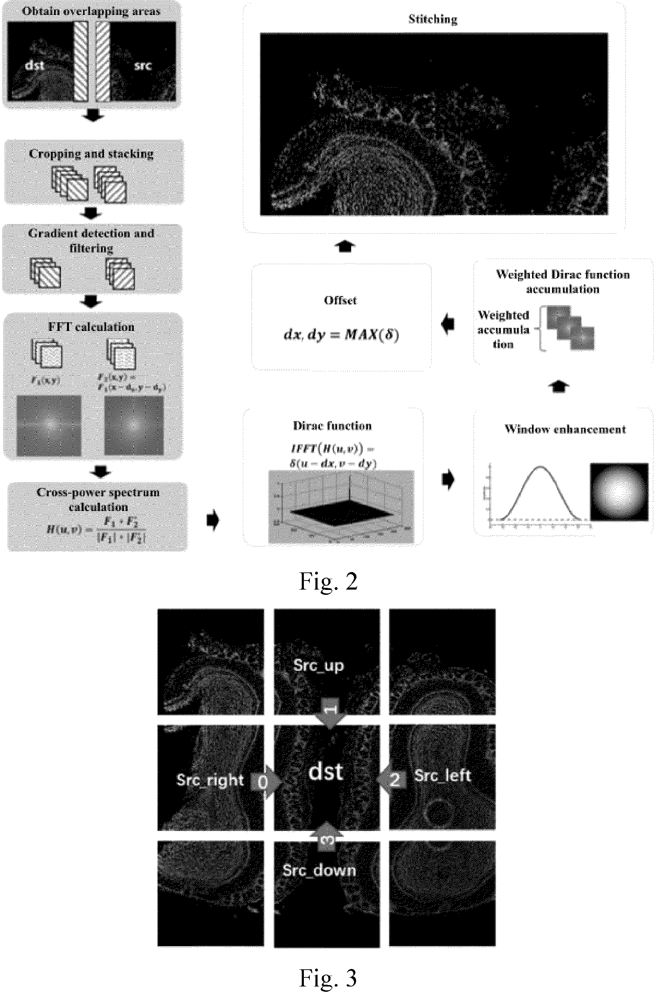

A flowchart of an implementation of a method for stitching images according to an embodiment of the present disclosure is described below with reference to FIG. 2.

The example shown in FIG. 2 includes the following operations.

• Corresponding overlapping region sub-images in src fa(x, y) and dst fb(x, y) are copied based on prior overlapping regions in a defined matching direction. In some implementations, it is ensured that the copied images have the prior overlapping region of more than 30%, but in other implementations, other values different from 30% may be used.

Before this operation, the matching direction from src to dst may be defined, and the input src and dst converted into grayscale images.

• Resampling and cropping is performed on the fa(x,y) and the fb(x,y), for example using a sliding window method at a specific proportion, to obtain a plurality of pairs of stacked small sub-images fai'(x, y) and fbi'(x, y), where i represents a sequence number of the cropped sub-image. In this sliding window method, specific overlapping regions may be set, and a plurality of pairs of stacked small sub-images need to ensure that cropped areas of src and dst are located in the overlapping regions and are located at the same coordinate system locations. The method for resampling is not limited to a random cropping box. Alternatively, a target detection method may be used to crop areas with more features.

Before this operation, Gaussian filtering processing may be performed on the obtained overlapping region images to obtain denoised images. Instead of or in addition to the Gaussian filtering processing, windowing processing is performed to obtain images f'(x, y) and g'(x, y) with spectrum leakage suppressed. The method for windowing processing may include, but not limited to, a Hanning window, a Hamming window, or the like. The cropped images may be images subjected to denoising and/or windowing processing.

- Gradient detection may be performed on the plurality of obtained stacked sub-images, to filter out sub-images with few features or more noise. The method used for gradient detection may include, but not limited to, Sobel, Canny, etc.
- Fourier transform is performed on the obtained pair of sub-images fai'(x, y) and fbi'(x, y) to obtain corresponding spectra Fai'(u, v) and Fbi'(u, v), where u and v represent coordinate values of each frequency in a spectrum.
- The obtained Fai'(u, v) and Fbi'(u, v) are substituted into a cross-power spectrum correlation equation to obtain a frequency domain expression of a correlation peak of each sub-image pair.

A used cross-power correlation formula is:

$$Hi(u, v) = \frac{Fai'(u, v)Fbi'^*(u, v)}{|Fai'(u, v)||Fbi'^*(u, v)|}$$

where $Fbi'^*(u, v)$ is a complex conjugate of $Fbi'(u, v)$; $|Fai'(u, v)|$ and $|Fbi'^*(u, v)|$ are moduli of $Fai'(u, v)$ and $Fbi'^*(u, v)$ respectively; and $Hi(u, v)$ is a cross-power spectrum corresponding to a sub-image pair i.

- Inverse DFT is performed on the cross-power spectrum of the sub-image pair i to obtain a Dirac function representation of the sub-image pair i, and windowing processing is performed to improve an energy frequency domain result $\delta_i(u, v)$ of the sub-image with an unobvious feature. The window function used herein may be a Blackman window, a Hanning window, or a hamming window, and other window functions which can achieve a similar effect can be used for this operation. Through comparative experiments, it is found that the foregoing windowing processing can effectively improve the success rate of image registration of images with unobvious features.

- After all the stacked sub-image pairs are subjected to FFT calculation, cross-power spectrum calculation, and window enhancement processing, enhanced energy spectra can be obtained. After the enhanced energy spectra are superimposed based on the number of resampled channels, weighted aggregation is performed in the channel dimension. This aims to enhance energy signals at maximum response locations of the energy spectra while suppressing an abnormal energy peak caused by noise:

$$\delta(u, v) = \sum_{i=1}^{n} wi * \delta i(u, v)$$

where $wi$ is a weight matrix, and an expression is $wi(u, v) = \frac{\max(\delta i(u,v))}{\sum_{i=1}^{n} \max(\delta i(u,v))}$

A weighting parameter in the weight matrix $wi$ may be determined not only based on a value of a spectrum signal, but also based on factors such as a matching number of feature points and an image definition score.

- Inverse DFT is performed on the obtained frequency domain expression of the correlation peak to obtain a Dirac function representation of the whole image, from which coordinates (xm, ym) of the maximum peak are found as an offset value for all pixels.
- Image translation is performed using the calculated offset value to implement high-precision image stitching.

The technical solution provided in the foregoing example is highly robust to scenes and signal-to-noise ratios, and achieves a fast calculation speed. Specifically, the foregoing scheme has the following advantages.

At first, an existing/prior overlap area can be used (for example, an overlap may be roughly estimated by using parameters of a used microscope as a basis of further image registration, or a rough overlap may be obtained in any other available manner), which narrows an image registration range, reduces cross-power spectrum calculation without reducing stitching precision, and accelerates image stitching.

In addition, the images of the overlapping regions are resampled into a plurality of sub-image areas, which significantly improves the robustness of cross-power spectra without increasing the calculation amount. Because the resampled sub-image areas all have an identical offset, superimposition of cross-power spectra of the sub-image areas can increase an energy peak corresponding to an offset location, thereby improving image stitching quality and stitching precision for areas with unobvious features.

Further, the Dirac function representations of the sub-image pairs are accumulated in a weighted manner, such that an area with more features, corresponding obtained cross-power spectrum energy has a larger weight, while a smaller weight is assigned to an area with poor features or an area full of noise in this weighted manner, thereby reducing the impact of noise on the stacked energy spectra.

Furthermore, the obtained Dirac function representations are processed by a window function, which can not only reduce noise peaks in the Dirac function representations, but also enhance an energy signal at a stitching offset location, thereby improving robustness to noise of the scheme, and further improving the stitching effect of the scheme in scenes with unobvious features.

Finally, since the entire calculation process are matrix operations, dense matching can be implemented to ensure a high calculation speed.

FIG. 3 to FIG. 10 show another implementation of a method for stitching images according to an embodiment of the present disclosure.

FIG. 3 is a schematic diagram of definition of a matching direction according to an embodiment of the present disclosure. As shown in FIG. 3, a template image is named dst, and remaining to-be-stitched images in four directions are named src_up, src_down, src_right, and src_left according to relative positional with respect to dst, corresponding to matching directions of top to bottom, bottom to top, right to left, and left to right, respectively. The definition of the directions can be used for subsequent cropping in overlapping regions for stitching, thereby reducing unnecessary calculation. It should be noted that because the directions are relative, the directions change accordingly when a different image is selected as dst.

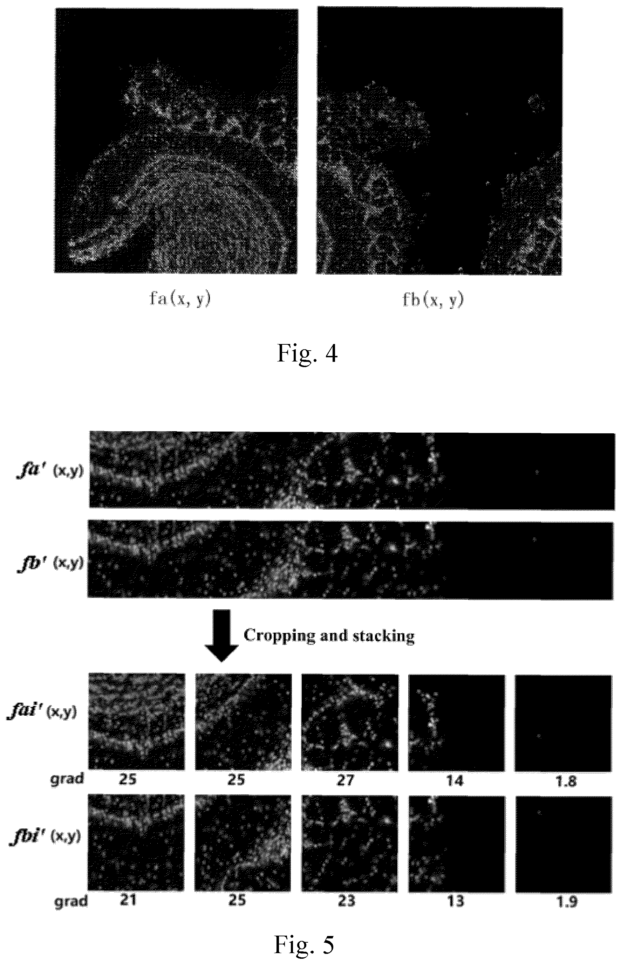

FIG. 4 is a schematic diagram of to-be-registered images according to an embodiment of the present disclosure. The two to-be-registered images are fa(x, y) and fb(x, y), with original sizes being 480 × 480 pixels, and correspond to the first two images in the first row of FIG. 3, respectively. As shown in FIG. 4, according to the defined stitching direction, stitching is performed in a horizontal direction.

As shown in FIG. 5, the two images are cropped in overlapping regions according to 1 time of the size of the overlap, to obtain overlapping region sub-images *fa'(x, y)* and *fb'(x, y)* shown in the upper half of FIG. 5.

On this basis, the two obtained overlapping images are merged and then resampled. In this example, the sliding window method is used for sliding cropping to obtain five pairs of sub-images *fai'(x, y)* and *fbi'(x, y)*, and each pair of sub-images are consistent in length and width. Such processing ensures that a significant maximum peak enhancement effect can be achieved at a stitching location during Dirac function accumulation.

Next, a Gaussian filtering operation is performed on all sub-images to remove noise information in the images.

Then, a gradient is calculated for each sub-image, to filter out a sub-image area without any gradient information in which a high-energy signal in an energy spectrum occurs at a wrong location. For example, in the sub-image pairs shown in FIG. 5, a pair of sub-images *fa4'(x, y)* and *fb4'(x, y)* with corresponding gradients of 1.8 and 1.9 are eliminated.

Next, the remaining four pairs of sub-images are subjected to DFT to obtain their corresponding spectra $Fa_i(u, v)$ and $Fb_i(u, v)$, where $i = 0, 1, 2, 3$, the spectrum calculation formula is as follows:

$$F(u, v) = \sum_{x=0}^{M-1} \sum_{y=0}^{N-1} f(x, y) e^{-j2\pi\left(\frac{ux}{M} + \frac{vy}{N}\right)}$$

Then, spectra $Fa_i(u, v)$ and $Fb_i(u, v)$ of two sub-images in a corresponding sub-image pair are substituted into a cross-power spectrum calculation formula, and a Dirac function is obtained through inverse Fourier transform (IFFT). The cross-power spectrum calculation formula used is as follows:

$$Hi(u, v) = \frac{Fa_i(u, v) Fb_i(u, v)}{|Fa_i(u, v)| |Fb_i^*(u, v)|}$$

A used Dirac function calculation expression is as follows:

$$\delta(u,v) = IFFT\big(H(u,v)\big) = \delta(u - dx, v - dy)$$

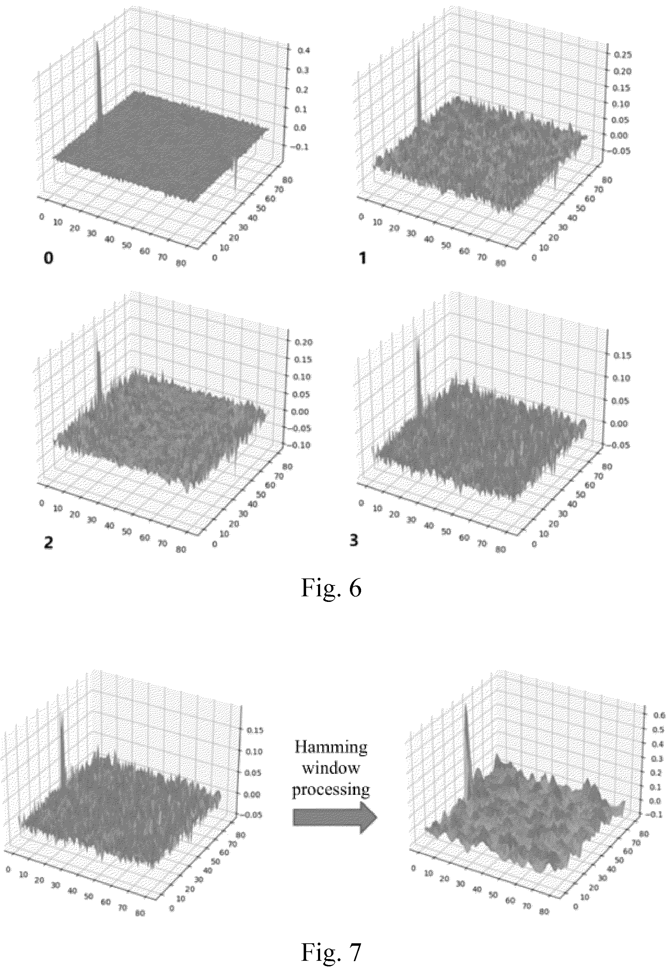

Four Dirac function representations (for example, in a 3D graph form) are obtained from the four pairs of sub-images. As shown in FIG. 6, it can be found that there is a maximum peak in each Dirac function 3D graph, but each peak has a different peak value. A larger peak value indicates higher stitching precision at this location.

In order to further strengthen the maximum peaks in the Dirac function representations and suppress a part of noise peaks, for example, a Hamming window may be used for processing. As shown in FIG. 7, signal strength of a maximum peak can be further enhanced significantly.

Next, all Dirac function representations may be accumulated in a weighted manner. As shown in FIG. 6, coordinates and strength (x, y, energy) of the maximum peaks in the Dirac functions of the four sub-image pairs are ([0, 44, 0.42], [0, 43, 0.23], [0, 43, 0.19], [1, 44, 0.17]). A larger peak value indicates a better registration effect at the coordinates. Next, the value of the maximum peak in each Dirac function representation is normalized in a weighted manner. Relevant formulas are as follows:

$$wi = \frac{max\big(\delta i(u,v)\big)}{\sum_{i=0}^{3} max\big(\delta i(u,v)\big)}$$

$$\delta(u,v) = \sum_{i=0}^{3} wi * \delta i$$

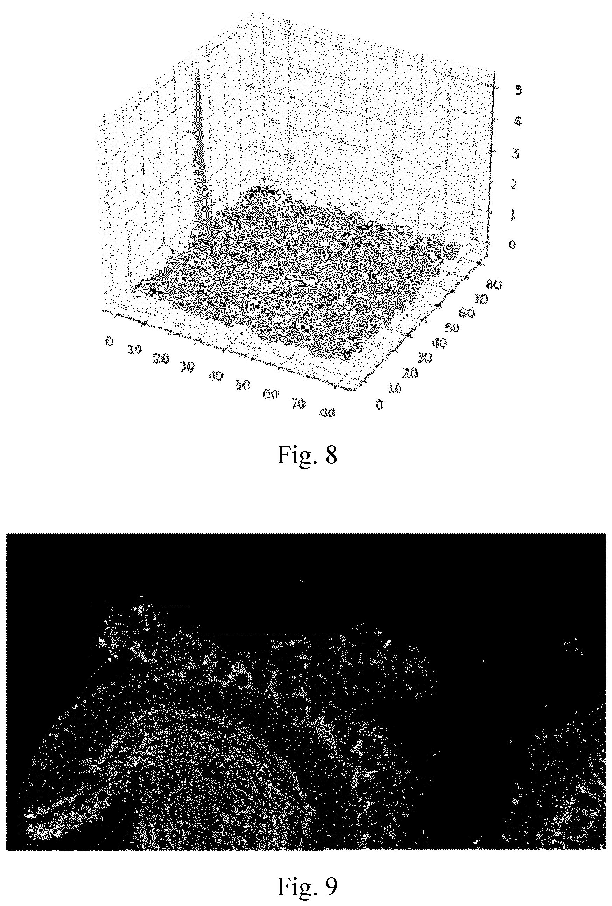

It can be concluded from the obtained accumulated Dirac function representation that a location representing a maximum response is found in a matching degree response matrix of the whole image as a location for stitching. As shown in FIG. 8, a maximum energy peak location corresponding to this implementation example is [0, 44, 5.35], indicating that an image obtained after the to-be-stitched image is translated to the left by 44 pixels has the best effect, as shown in FIG. 9.

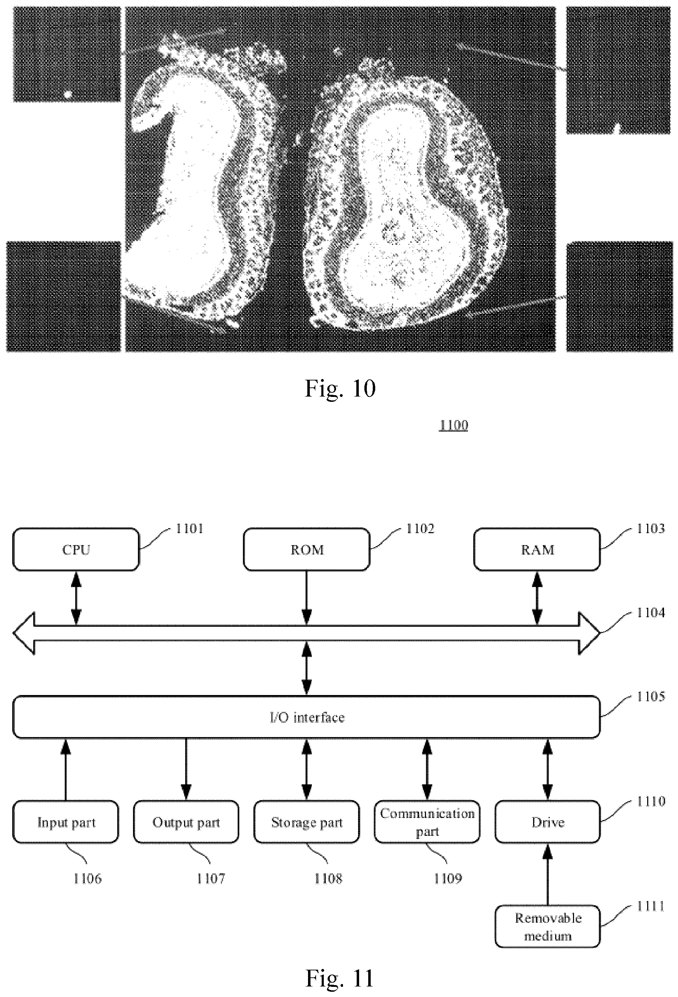

When the effect of the technical scheme of the present disclosure is tested, a global template line may be used to assist in verification. FIG. 10 is a diagram showing a stitching effect with a template line in a method for stitching images according to an embodiment of the present disclosure. As shown in FIG. 10, this diagram shows an effect of stitching 3×4 480*480 small images into a large image, where there is a global template line in non-organized areas of the small images. It can be seen from the template line that deviations at locations of stitched seams are all 0 pixel, which means that the technical scheme of the present disclosure can achieve an accurate stitching effect.

FIG. 11 is a schematic block diagram of a device 1100 for performing a method for stitching images according to an embodiment of the present disclosure. The device shown in FIG. 11 may be any device with a processing capability. It should be noted that, the device shown in FIG. 11 is merely an example, and should not impose any limitation on the functions and scope of use of embodiments of the present disclosure.

As shown in FIG. 11, the device 1100 according to this embodiment includes a Central Processing Unit (CPU) 1101, which can perform various appropriate actions and processing according to a program stored in a Read-Only Memory (ROM) 1102 or a program loaded from a storage part 1108 to a Random Access Memory (RAM) 1103. The RAM 1103 also stores various programs and data required by operations of the device 1100. The CPU 1101, the ROM 1102, and the RAM 1103 are connected to each other via a bus 1104. An input/output (I/O) interface 1105 is also connected to the bus 1104.

The device 1100 may further include one or more of the following components connected to the I/O interface 1105: an input part 1106 including a keyboard, a mouse, or the like; an output part 1107 including a Cathode Ray Tube (CRT) or a Liquid Crystal display (LCD), a speaker, or the like; the storage part 1108 including a Hard Disk Drive (HDD) or the like; and a communication part 1109 including a network interface card such as a LAN card or a modem. The communication part 1109 performs communication processing via a network such as the Internet. A drive 1110 is also connected to the I/O interface 1105 when necessary. A removable medium 1111, such as a magnetic disk, an optical disc, a magneto-optical disk, or a semiconductor memory, is installed on the drive 1110 when necessary, such that a computer program read therefrom is installed in the storage part 1108 when necessary.

In particular, according to an embodiment of the present disclosure, the process described above with reference to the flowchart may be implemented as a computer software program. For example, an embodiment of the present disclosure provides a computer program product, including a computer program stored on a computer-readable medium, the computer program including program code for executing the method shown in the flowchart. In such an embodiment, the computer program may be downloaded from a network via the communication part 1109 and installed, and/or may be installed from the removable medium 1111. The computer program, when executed by the CPU 1101, causes the CPU 1101 to implement the foregoing functions defined in the device in embodiments of the present disclosure.

It should be noted that the computer-readable medium illustrated in the present disclosure may be a computer-readable signal medium, a computer-readable storage medium, or any combination thereof. The computer-readable storage medium may be, for example but not limited to, an electronic, magnetic, optical, electromagnetic, infrared, or semiconductor system, apparatus, or device, or any combination thereof. More specific examples of the computer-readable storage medium may include, but not limited to, electrical connections having one or more wires, a portable computer disk, an HDD, a RAM, a ROM, an Erasable Programmable Read-Only Memory (EPROM or flash memory), an optical fiber, a portable Compact Disk Read-Only Memory (CD-ROM), an optical storage device, a magnetic storage device, or any appropriate combination thereof. In the present disclosure, the computer-readable storage medium may be any tangible medium including or storing a program, and the program can be used by or used in combination with an instruction execution system, apparatus, or device. In the present disclosure, the computer-readable signal medium may include a data signal that is propagated in a baseband or as a part of a carrier, carrying computer-readable program code. The propagated data signal may be in a variety of forms including, but not limited to, an electromagnetic signal, an optical signal, or any appropriate combination thereof. Alternatively, the computer-readable signal medium may be any computer-readable medium other than the computer-readable storage medium, and the computer-readable medium can send, propagate, or transmit a program that is used by or used in combination with an instruction execution system, apparatus, or device. The program code included in the computer-readable medium may be transmitted by any appropriate medium, including, but not limited to, radio, an electrical wire, an optical cable, RF, or the like, or any appropriate combination thereof.

The method and related device in the present disclosure have been described above with reference to example embodiments. Those having ordinary skills in the art may appreciate that the method illustrated above is merely an example. The method of the present disclosure is not limited to the steps and sequence illustrated above. The device illustrated above may include more modules, for example, modules that can be developed or will be developed in the future and that can be used for the device. The identifiers shown above are merely examples rather than limitative, and the present disclosure is not limited to specific information elements that are used as examples of these identifiers. Those having ordinary skills in the art may make many changes and modifications according to the teachings of the illustrated embodiments.

The program running on the device of the present disclosure may be a program that controls a CPU to cause a computer to implement functions of embodiments of the present disclosure. The program or information processed by the program may be temporarily stored in a volatile memory (such as a RAM), an HDD, a non-volatile memory (such as a flash memory), or other memory systems.

Programs for implementing functions of embodiments of the present disclosure may be recorded in a computer-readable recording medium. A corresponding function may be implemented by causing a computer system to read programs recorded in the recording medium and execute these programs. The "computer system" herein may be a computer system embedded in the device, and may include an operating system or hardware (such as a peripheral device). The "computer-readable recording medium" may be a semiconductor recording medium, an optical recording medium, a magnetic recording medium, a recording medium for short-term dynamic storage of programs, or any other recording medium readable by a computer.

The features or functional modules of the device as used in the foregoing embodiments may be implemented or executed by using a circuit (for example, a single-chip or multi-chip integrated circuit). Circuits designed to perform the functions described in this description may include a general-purpose processor, a Digital Signal Processor (DSP), an Application-specific Integrated Circuit (ASIC), a Field Programmable Gate Array (FPGA) or another programmable logic device, a discrete gate or transistor logic, a discrete hardware component, or any combination thereof. The general-purpose processor may be a microprocessor, any conventional processor, a controller, a microcontroller, or a state machine. The circuit may be a digital circuit or an analog circuit. In the case where new integrated circuit technologies that replace existing integrated circuits emerge due to advances in semiconductor technologies, one or more embodiments of the present disclosure may alternatively be implemented by using these new integrated circuit technologies.

Embodiments of the present disclosure have been described above in detail with reference to the accompanying drawings. However, a specific structure is not limited to the foregoing embodiments, and the present disclosure includes any design changes made without departing from the idea of the present disclosure. In addition, various changes may be made to the present disclosure within the scope of the claims, and embodiments obtained by appropriately combining technical means disclosed in different embodiments also fall within the technical scope of the present disclosure. In addition, components described in the foregoing embodiments and having the same effect may be replaced with each other.

**Claims**

1. A method for stitching a first image and a second image, comprising:

determining an overlapping region of the first image and the second image, respectively;
respectively cropping a part, determined as the overlapping region, of the first image and the second image into multiple first image overlapping sub-images and multiple second image overlapping sub-images of the same number, and pairing the multiple first image overlapping sub-images and the multiple second image overlapping sub-images into a plurality of overlapping sub-image pairs;
obtaining an offset between the first image and the second image by performing frequency domain calculation on the plurality of overlapping sub-image pairs; and
translating the first image toward the direction of the second image by the offset, and then stitching the first image and the second image.

2. The method of claim 1, wherein determining an overlapping region of the first image and the second image comprises:

determining a matching direction between the first image and the second image; and
selecting, along the determined matching direction, an adjacent area with identical size in the first image and the second image respectively as the overlapping region.

3. The method of claim 2, wherein the overlapping region is selected in such a way that a proportion of an actual overlapping part of the first image and the second image in the overlapping region is greater than a predetermined threshold.

4. The method of claim 2, wherein respectively cropping a part, determined as the overlapping region, of the first image and the second image into multiple first image overlapping sub-images and multiple second image overlapping sub-images of the same number, and pairing the multiple first image overlapping sub-images and the multiple second image overlapping sub-images into a plurality of overlapping sub-image pairs comprises:

performing denoising and/or windowing processing on the part, determined as the overlapping region, of the first image and the second image, respectively;
merging, in a direction perpendicular to the matching direction, the first image and the second image subjected to the denoising and/or windowing processing, and resampling the part, subjected to the denoising and/or windowing processing, of the first image and the second image based on an identical image cropping size, to obtain the multiple first image overlapping sub-images and the multiple second image overlapping sub-images; and
sequentially pairing the multiple first image overlapping sub-images with the multiple second image overlapping sub-images one by one in the direction perpendicular to the matching direction to form the plurality of overlapping sub-image pairs.

5. The method of claim 1, further comprising:
after obtaining the plurality of overlapping sub-image pairs and before performing frequency domain processing on the plurality of overlapping sub-image pairs, removing an overlapping sub-image pair with features less than a specific criterion and/or noise greater than a specific criterion from the plurality of overlapping sub-image pairs.

6. The method of claim 1, wherein obtaining an offset between the first image and the second image by performing frequency domain calculation on the plurality of overlapping sub-image pairs comprises:
stacking cross-power spectra of the plurality of overlapping sub-image pairs, and obtaining the offset from the stacked cross-power spectra by a Dirac function.

7. The method of claim 6, wherein stacking cross-power spectra of the plurality of overlapping sub-image pairs, and obtaining the offset from the stacked cross-power spectra by a Dirac function comprises:

transforming each overlapping sub-image in the plurality of overlapping sub-image pairs from a location coordinate system to a frequency domain;
calculating a cross-power spectrum corresponding to each of the plurality of overlapping sub-image pairs;
performing inverse discrete Fourier transform on the obtained cross-power spectrum corresponding to each overlapping sub-image pair, to obtain a Dirac delta function representation of the overlapping regions; and
determining the coordinates of the maximum peak of the Dirac delta function representation as the offset.

8. The method of claim 7, wherein before the obtained cross-power spectrum corresponding to each overlapping sub-image pair is accumulated, for each obtained overlapping sub-image pair, the method further comprises:

transforming the overlapping sub-image pair to the local coordinate system; and
performing windowing processing on overlapping sub-images transformed to the location coordinate system, to enhance features representation in the overlapping sub-images.

9. The method of claim 7, wherein performing inverse discrete Fourier transform on the obtained cross-power spectrum corresponding to each overlapping sub-image pair, to obtain a Dirac function representation of the overlapping region comprises:

performing inverse discrete Fourier transform on the obtained cross-power spectrum corresponding to each overlapping sub-image pair, to obtain a plurality of Dirac delta function representations; and
performing weighted aggregation on the plurality of obtained Dirac delta response maps to obtain the Dirac function representation of the overlapping region,
wherein a weighting coefficient of each overlapping sub-image pair depends on an energy spectrum of the overlapping sub-image pair and/or a matching number of feature points of the overlapping sub-image pair and/or an image definition of the overlapping sub-image pair.

10. A device for stitching a first image and a second image, comprising:

a processor; and
a memory storing an instruction which, when executed by the processor, causes the processor to perform the method according to any one of claims 1 to 9.

11. A computer storage medium storing an executable instruction which, when executed by a processor, causes the processor to perform the method according to any one of claims 1 to 9.

**100**

Determine overlapping areas of a first image and a second image | **110**

Respectively crop parts, determined as the overlapping areas, of the first image and the second image into a plurality of first image overlapping sub-images and a plurality of second image overlapping sub-images of a same number for pairing into a plurality of overlapping sub-image pairs | **120**

Obtain an offset of a same feature between the first image and the second image | **130**

Translate the first image toward a direction of the second image by the determined offset, and stitch the first image and the second image | **140**

Fig. 1

Fig. 2

Fig. 3

fa(x, y)        fb(x, y)

Fig. 4

Fig. 5

Fig. 6

Hamming
window
processing

Fig. 7

Fig. 8

Fig. 9

Fig. 10

1100

Fig. 11

## INTERNATIONAL SEARCH REPORT

| International application No. |
| --- |
| **PCT/CN2022/136578** |

**A. CLASSIFICATION OF SUBJECT MATTER**

G06T3/00(2006.01)i

According to International Patent Classification (IPC) or to both national classification and IPC

**B. FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNKI, DWPI, CNTXT, WPABS, ENTXT: 图像, 拼接, 重叠, 合成, 全景, 平移, 偏移, 频域, 频谱, 傅里叶, 狄拉克, 加窗, 分割, 切割, 裁剪, 划分, image?, stitch+, mosaic+, composit+, fourier, frequency w domain, cut+, crop+, offset, overlap

**C. DOCUMENTS CONSIDERED TO BE RELEVANT**

| Category* | Citation of document, with indication, where appropriate, of the relevant passages | Relevant to claim No. |
| --- | --- | --- |
| Y | US 2009022419 A1 (3DHISTECH KFT.) 22 January 2009 (2009-01-22) <br> description, paragraphs [0016]-[0036], and figures 1-5 | 1-11 |
| Y | CN 113364978 A (AIKU SOFTWARE TECHNOLOGY (SHANGHAI) CO., LTD.) 07 September 2021 (2021-09-07) <br> description, paragraphs [0061]-[0072], and claims 9-10 | 1-11 |
| A | CN 101221661 A (SHENZHEN XUNLEI NETWORKING TECHNOLOGIES CO., LTD.) 16 July 2008 (2008-07-16) <br> entire document | 1-11 |
| A | CN 105096283 A (HUAWEI TECHNOLOGIES CO., LTD. et al.) 25 November 2015 (2015-11-25) <br> entire document | 1-11 |
| A | CN 113112398 A (BEIJING BAIDU NETCOM SCIENCE AND TECHNOLOGY CO., LTD.) 13 July 2021 (2021-07-13) <br> entire document | 1-11 |
| A | JP 2019053758 A (RICOH CO., LTD.) 04 April 2019 (2019-04-04) <br> entire document | 1-11 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 August 2023** | **22 August 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/136578**

### C. DOCUMENTS CONSIDERED TO BE RELEVANT

| Category* | Citation of document, with indication, where appropriate, of the relevant passages | Relevant to claim No. |
|---|---|---|
| A | US 10628698 B1 (GRUNDIUM OY) 21 April 2020 (2020-04-21)<br>entire document | 1-11 |

Form PCT/ISA/210 (second sheet) (July 2022)

**INTERNATIONAL SEARCH REPORT**
Information on patent family members

International application No.

**PCT/CN2022/136578**

| Patent document cited in search report | | | Publication date (day/month/year) | Patent family member(s) | | | Publication date (day/month/year) |
|---|---|---|---|---|---|---|---|
| US | 2009022419 | A1 | 22 January 2009 | US | 8041147 | B2 | 18 October 2011 |
| CN | 113364978 | A | 07 September 2021 | None | | | |
| CN | 101221661 | A | 16 July 2008 | None | | | |
| CN | 105096283 | A | 25 November 2015 | WO | 2015165222 | A1 | 05 November 2015 |
| CN | 113112398 | A | 13 July 2021 | None | | | |
| JP | 2019053758 | A | 04 April 2019 | JP | 6665917 | B2 | 13 March 2020 |
| US | 10628698 | B1 | 21 April 2020 | None | | | |

Form PCT/ISA/210 (patent family annex) (July 2022)